# EUROPÄISCHE PATENTANMELDUNG

(11) **EP 0 631 730 A2**
(43) Veröffentlichungstag der Anmeldung: **04.01.1995**
(21) Anmeldenummer: 94108422.0
(22) Anmeldetag: 01.06.1994
(51) Int. Cl.: A23L 1/19, A23C 13/14

(54) **Aufgeschäumte Milchcreme und Verfahren zu ihrer Herstellung**

(30) Priorität: 30.06.1993 DE 4321675; 24.12.1993 DE 4344534
(71) Anmelder: Herrmann, Martin, Prof. Dr., D-31515 Wunstorf (DE)
(72) Erfinder: Herrmann, Martin, Prof. Dr., D-31515 Wunstorf (DE)
(74) Vertreter: König, Norbert, Dipl.-Phys. Dr.

(57) **Zusammenfassung**

Aufgeschäumte Milchcreme und Verfahren zu ihrer Herstellung, gekennzeichnet durch folgende Herstellungsschritte:
a) Erhitzen eingestellter Milch und/oder Konzentrate aus Magermilch und/oder Konzentrate aus Vollmilch und/oder Konzentrate aus Molke und/oder in Wasser gelöstem Magermilchpulver und/oder in Wasser gelöstem Vollmilchpulver und/oder in Wasser gelösten Molkeneiweißerzeugnissen mit einem Gesamtfettgehalt der Mischung von 3,3 - 12 Gew.-% und einem Gesamteiweißgehalt der Mischung von 3-11 Gew.-% zur thermischen Denaturierung der Serumproteine und aus bakteriologischen Gründen,
b) Einrühren von 2-6 Gew.-% Honig und/oder Trockenhonig in die Milch,
c) Einrühren von 10 bis 52 Gew.-% Trockenkomponenten, nämlich Zucker und/oder Stärke und/oder Aufschlagmittel und/oder Vanillinzucker sowie von 0 bis 20 Gew.-% geschmacksgebenden Substanzen, nämlich Aromen, Gewürzen, Fruchtkonzentraten, Fruchtzubereitungen und/oder Kakao und/oder Käse oder Käsezubereitungen,
d) Herstellen einer Mischung aus Fett oder aus einer Fettmischung mit Emulgatoren und/oder Stabilisatoren,
e) Vermischen von der nach Schritt d) hergestellten Mischung mit der nach Schritt c) erhaltenen Gesamtmischung und Erhitzen der gesamten Mischung aus bakteriologischen Gründen,
f) Abkühlen der Mischung auf Aufschlagtemperatur,
g) Aufschlagen der Mischung,
h) Abkühlen der aufgeschlagenen Mischung,
i) Kristallisation der Mischung, und
j) Auftragen der fertigen cremeartigen Masse auf einen Teig und/oder ein anderes Lebensmittel.

## Beschreibung

Die Erfindung betrifft eine aufgeschäumte Milchcreme sowie ein Verfahren zu ihrer Herstellung.

Durch die DE-PS 30 15 825 ist eine Süßware in Form einer weichen, mit Inertgas geschäumten Masse auf der Basis einer Öl-in-Wasser-Emulsion bekannt, enthaltend Milchbestandteile, Speisefette, Monoglyceride, Zucker, Lactose und Wasser, mit einem pH-Bereich von 6,2 bis 7,5. Zur Herstellung der Masse wird vor allem gezuckerte, teilentrahmte Kondensmilch und außer nichtlactoseartigem Zucker noch Lactose verwendet. Die Ölphase besteht vorwiegend aus Speisefett.

In der DE-PS 37 27 680 wird eine Süßware in Form einer weichen, mit einem Inertgas geschäumten Masse auf der Basis einer Öl-in-Wasser-Emulsion beschrieben, enthaltend Milchbestandteile, Fettkomponenten, Zucker und Wasser. Zur Herstellung dieser Masse wird vorwiegend Quark oder Joghurt oder ein Gemisch daraus und Frisch- oder Kondensmilch sowie ein Trockengemisch aus Zucker, und Johannisbrotkernmehl verwendet. Die Fettkomponente besteht aus Pflanzenfett und/oder Butter. Dieses bekannte Verfahren ist durch die Verwendung von Quark, Joghurt und Kondensmilch aufwendig, da diese in vorgeschalteten Verfahrensschritten hergestellt werden müssen. Durch Zugabe von Kondensmilch besteht das Problem, daß der Laktosegehalt so stark erhöht wird, daß über die Auskristallisation der Laktose das Endprodukt im Gefüge sandig wird. Die Verwendung von Johannisbrotkernmehl ist vom Geschmack her unangenehm und verleiht dem Endprodukt eine zähe Struktur.

Die Aufgabe der vorliegenden Erfindung besteht darin, unter Verwendung von Milch eine aufgeschäumte Milchcreme zu schaffen, deren Konsistenz und Geschmack verbessert ist und mit wenig Aufwand herstellbar ist und bei der die Gefahr einer Sandigkeit des Endproduktes minimiert ist.

Die aufgeschäumte Milchcreme ist gekennzeichnet durch die Folge der Herstellungsschritte gemäß Kennzeichen des Anspruchs 1.

Erfindungsgemäß wird pro Ansatz benötigte Milch und/oder Konzentrate aus Magermilch und/oder Konzentrate aus Vollmilch und/oder Konzentrate aus Molke und/oder in Wasser gelöstes Magermilchpulver und/oder in Wasser gelöstes Vollmilchpulver und/oder in Wasser gelöste Molkeneiweißerzeugisse, die beispielsweise mit pflanzlichen und/oder tierischen Fetten wie z.B. Rahm und/oder Butter und/oder Butteröl und/oder Margarine und/oder Halbfetterzeugnisse und/oder Öle auf einen Fettgehalt von 3,3-12 % eingestellt werden, mit einer Temperatur von beispielsweise 4°C aus einem Stapeltank in einen Chargenbehälter gefahren. Die Erhitzung des eingestellten Produktes erfolgt auf 60°C-98°C über einen Röhren- oder Plattenwärmeaustauscher im Umlaufverfahren, wodurch eine gezielte Denaturierung der Serumproteine erzielt werden soll, wobei gleichzeitig Milcheiweißpulver zugegeben werden kann zur Einstellung eines Eiweißgehaltes von beispielsweise 3-11 %. Statt eines Milcheiweißpulvers können andere Eiweißerzeugnisse wie z.B. pflanzliche Eiweißerzeugnisse bzw. Hühnereiweiß in flüssiger und/oder getrockneter Form verwendet werden. Die eingestellte Mischung wird bei dieser Temperatur (60°C-98°C) im Umlauf für 4-45 Minuten, vorzugsweise 10 Minuten bei einer Temperatur von 90°C heiß gehalten.

Alternativ kann die Mischung über eine UHT-Anlage erhitzt werden auf 135°C-145°C mit einer Heißhaltezeit von 45 bis 3 Sekunden und danach auf 95°C-90°C abgekühlt werden.

Nach Beendigung der thermischen Behandlung wird zunächst Honig und/oder Trockenhonig zugegeben. Anschließend werden Trockenkomponenten, und zwar Zucker, Stärke, Aufschlagmittel, Vanillinzucker sowie Aromen zugegeben. Als Aufschlagmittel können beispielsweise Produkte auf der Basis pflanzlicher/tierischer Fette und/oder pflanzlicher/tierischer Eiweiße verwendet werden. Zusätzlich können noch färbende Lebensmittel wie z.B. Fruchtsäfte (Kirschsaft, Himbeersaft etc.) und Gemüsesäfte (Rote-Beete-Saft, Spinatsaft, Möhrensaft etc.) zugegeben werden.

Die Zugabe kann über einen Triblender erfolgen, wiederum im Umlaufverfahren. Die Zugabe kann auch kontinuierlich mit einer nachgeschalteten kontinuierlich betriebenen Mischvorrichtung erfolgen. Jeder Chargenbehälter besitzt ein Rührwerk mit einer speziellen Wandabschabungsvorrichtung.

Danach wird ein Fett bzw. eine Fettmischung, beispielsweise Pflanzenfett über beheizbare Rohrleitungen mit ca. 40°C bis 80°C zugemischt, wobei vorher die benötigten Stabilisatormengen und/oder Emulgatormengen beispielsweise über einen Wiegebehälter zudosiert werden.

Die fertige Mischung wird danach aus bakteriologischen Gründen auf 70°C bis 145°C erhitzt, da bedingt durch den Anmischprozeß mit einem Temperaturabfall auf ca. 60°C (±5°C) zu rechnen ist. Die Fettmischung bzw. das Fett wird so behandelt, daß - insbesondere für die Hauptfettfraktionen - ein bestimmter Schmelzpunkt zwischen 28°C und 45°C erzielt wird, wodurch die Konsistenz der fertigen Milchcreme beeinflußt werden kann. Dieser Schmelzpunktbereich kann eingestellt werden durch die Verwendung verschiedener Fette, durch Fraktionierung eines Fettes oder einer Fettmischung und/oder durch Härtung. Beispielsweise kann durch die Zugabe von Fetten mit einem hohen Schmelzpunkt, wie z. B. Kakaobutter, eine festere Konsistenz erreicht bzw. eingestellt werden.

Aus produktionstechnischen Gründen kann das Produkt mit Hilfe eines Schabewärmeaustauschers ohne Aufschlag auf eine Temperatur von 4-12°C gekühlt und kalt gelagert werden. Aus bakteriologischen Gründen ist vor einer Weiterverarbeitung des Produktes wiederum eine Erhitzung auf 70-98°C erforderlich.

Um die thermische Belastung des Produktes zu minimieren, wird das Produkt auf eine Aufschlagtemperatur von 80°C bis 25°C gekühlt. Die fertige Mischung wird über eine regelbare Pumpe zum Aufschlaggerät gefördert, in dem der Aufschlag mit Luft- oder Inertgas, vorzugsweise Stickstoff, durchgeführt wird. Der Aufschlag liegt je nach gewünschtem Gefüge zwischen 30 und 200 Vol.-%. Vor und nach jedem Aufschlag erfolgt eine Dichte- und Volumenmessung. Anschließend wird das aufgeschlagene Produkt auf 35°C bis -10°C abgekühlt, vorzugsweise in einem Schabewärmeaustauscher. Dieses wurde in Versuchen mit einem Versuchskühler Typ VWK 01/60-400 mit Kompressor der Firma Schröder und Co., Lübeck, durchgeführt. Über die Höhe der Abkühltemperatur kann die Viskosität des Endproduktes, bedingt durch die gezielte Fettkristallisation, wesentlich beeinflußt werden. Durch den Einsatz von zwei Schabewärmeaustauschern kann eine weitere Verbesserung der Konsistenz erfolgen, wobei im ersten Schabewärmetauscher das Produkt auf 35°C bis 20°C und im zweiten Schabewärmeaustauscher auf 20°C bis -10°C abgekühlt wird.

Für eine weitere Konsistenzeinstellung kann das Produkt mit einem Pinmixer behandelt werden, wobei sich das Produkt durch Nachkristallisation nochmals erwärmt, beispielsweise auf ca. 12°C bei vorheriger Abkühlung auf 2°C. Ebenso kann das Produkt auf eine Temperatur von ca. 20°C gekühlt werden und keine Pinmixernachbehandlung erfahren. Danach gelangt das Produkt zum Auftrag. Unter einem Pinmixer versteht man eine intensiv arbeitende Knetvorrichtung, die mit rotierenden Stiften ausgestattet ist. Nach dem Pinmixer kann gegebenfalls noch durch ein Drosselventil ein Gegendruck aufgebaut werden. Der Auftrag der fertigen Creme auf einen geeigneten Teig erfolgt wahlweise mit gekühlten Walzen oder mit einem speziell ausgelegten Düsensystem. Anschließend wird das fertige Produkt unter keimarmen Bedingungen verpackt, gekühlt und gelagert.

Zusätzlich kann hinter dem Pinmixer eine bestimmte Reworkmenge (0 bis 50 %) kontinuierlich der fertigen Mischung abgenommen werden, um die Produktmenge der Auftragsleistung anzupassen. Die Reworkmenge wird über beheizbare Rohrleitungen in einen Rückschmelztank geführt, wo sie mit Hilfe von Heißwasser auf ca. 60°C erwärmt wird und dann der fertigen Chargenmischung zugemischt wird.

Aus dem beschriebenen Verfahren ist ersichtlich, daß neben den benötigten Zusätzen nur eine auf einen bestimmten Fettgehalt eingestellte Milch verwendet wird. Dadurch ergibt sich ein Endprodukt mit einem sehr geringen Lactoseanteil, wodurch die Gefahr einer Sandigkeit minimiert wird. Das Endprodukt weist in Abhängigkeit von der Rezeptur folgende Zusammensetzung auf:

**Tabelle**

| Merkmale | Mischung |
|---|---|
| | |
| pH | 6,0-6,9 |
| Viskosität | 200-15.000 mPa s *) |
| Aw-Wert | 0,70-0,85 |
| Dichte | 1,0-1,10 **) |
| Gesamtfett | 32-36 Gew.-% |
| Kohlenhydrate | 30-40 Gew.-% |
| Gesamteiweiß | 2-7 Gew.-% |
| Wassergehalt | 22-30 Gew.-% |
| Hinweis: Für die Bestimmung der Viskosität wurde ein Kugelfallviskosimeter nach Höppler verwendet. | |

| | |
|---|---|
| *) bei 50°C | |
| **) Im nichtaufgeschlagenen Zustand | |

Die angegebene Zusammensetzung kann sich ändern, wenn eine entsprechende Aromatisierung erfolgt. Geringfügige Änderungen treten bei Zusatz von Aromen oder Gewürzen auf. Größere Änderungen treten auf bei Zugabe von Fruchtkonzentraten oder Gemüsekonzentraten und/oder Fruchtzubereitungen oder Kakaopulver.

Der Eiweißgehalt kann eine wesentliche Änderung erfahren beim Zusatz von aufbereiteten Käsemischungen zur Herstellung einer Milchcreme mit einem käseähnlichen Geschmack.

Nachfolgend ist beispielhaft ein Verfahrensablauf auf der Basis des Rezepturbeispiels 1 beschrieben:
- Erhitzen mit Rahm und Eiweißpulver eingestellter Vollmilch mit einem Fettgehalt von ca. 8,3 Gew.-% und einem Eiweißgehalt von ca. 9,2 Gew.-% auf 90°C zur thermischen Denaturierung der Serumproteine und aus bakteriologischen Gründen,
- Heißhalten der Mischung bei 90°C für 10 Minuten,
- Einrühren von ca. 4 Gew.-% Honig in die Milch,
- Einrühren von ca. 41,4 Gew.-*%* Trockenkomponenten, nämlich Zucker , Weizenstärke, Aufschlagmittel, Vanillinzucker sowie von 0,23 % Gew.-% Aroma,
- Aufschmelzen von pflanzlichen Fetten und Mischen mit Emulgator Lecithin und Stabilisator,
- Vermischen der Fettmischung mit der nach Trockenkomponentenmischung erhaltenen Mischung,
- Erhitzen der gesamten Mischung auf 75°C,
- Abkühlen der Mischung auf ca. 45°C Aufschlagtemperatur,
- Aufschlagen der Mischung mit ca. 100 % Aufschlag unter Einsatz eines industriellen Aufschlaggerätes,
- Abkühlen der aufgeschlagenen Mischung auf 2°C,
- Nachbehandlung der aufgeschlagenen Mischung mit einem Pinmixer,
- Kristallisation der Mischung, und
- Auftragen der fertigen cremeartigen Masse auf einen Teig.

Nachfolgend sollen beispielhaft vier Rezepturen mit unterschiedlichen geschmacksgebenden Substanzen angegeben werden:

| Rezepturbeispiel 1, aufgeschäumte Milchcreme: | |
|---|---|
| Milch, frisch 3,5 % Fett | 23,09 Gew.-% |
| Rahm | 3,97 Gew.-% |
| Fett | 23,82 Gew.-% |
| Kristallzucker | 17,35 Gew.-% |
| Glucose | 6,95 Gew.-% |
| Stabilisator | 0,99 Gew.-% |
| Lecithin | 0,50 Gew.-% |
| Aufschlagmittel | 15,39 Gew.-% |
| Honig | 3,97 Gew.-% |
| Milcheiweißpulver | 1,99 Gew.-% |
| Weizenstärke | 1,74 Gew.-% |
| Vanillinzucker | 0,01 Gew.-% |
| Aroma | 0,23 Gew.-% |

| Rezepturbeispiel 2, aufgeschäumte Milchcreme mit höherem Milchanteil: | |
|---|---|
| Milch, frisch 3.5 % Fett | 36,18 Gew.-% |
| Rahm | 3,84 Gew.-% |
| Fett | 23,04 Gew.-% |
| Kristallzucker | 16,78 Gew.-% |
| Stabilisator | 0,96 Gew.-% |
| Lecithin | 0,48 Gew.-% |
| Aufschlagmittel | 12,96 Gew.-% |
| Honig | 3,84 Gew.-% |
| Weizenstärke | 1,68 Gew.-% |
| Vanillinzucker | 0,01 Gew.-% |
| Aroma | 0,22 Gew.-% |

| Rezepturbeispiel 3, aufgeschäumte Milchcreme "Erdbeer": | |
|---|---|
| Milch, frisch 3,5 % Fett | 19,68 Gew.-% |
| Rahm | 3,71 Gew.-% |
| Fett | 23,87 Gew.-% |
| Kristallzucker | 17,05 Gew.-% |
| Glucose | 6,99 Gew.-% |
| Stabilisator | 0,95 Gew.-% |
| Lecithin | 0,49 Gew.-% |
| Aufschlagmittel | 15,52 Gew.-% |
| Honig | 3,85 Gew.-% |
| Milcheiweißpulver | 2,13 Gew.-% |
| Weizenstärke | 1,71 Gew.-% |
| Vanillinzucker | 0,01 Gew.-% |
| Aroma | 0,21 Gew.-% |
| Rote-Beete-Saft-Lösung | 3,82 Gew.-% |

| Rezepturbeispiel 4, aufgeschäumte Milchcreme "Schoko": | |
|---|---|
| Milch, frisch 3,5 % Fett | 25,31 Gew.-% |
| Fett | 23,62 Gew.-% |
| Kristallzucker | 15,19 Gew.-% |
| Glucose | 7,17 Gew.-% |
| Stabilisator | 1,01 Gew.-% |
| Lecithin | 0,55 Gew.-% |
| Aufschlagmittel | 16,45 Gew.-% |
| Honig | 3,35 Gew.-% |
| Milcheiweißpulver | 1,27 Gew.-% |
| Weizenstärke | 1,86 Gew.-% |
| Vanillinzucker | 0,01 Gew.-% |
| Kakao | 4,22 Gew.-% |

## Patentansprüche

1. Aufgeschäumte Milchcreme, **dadurch gekennzeichnet,** daß die Milchcreme durch folgende Herstellungsschritte erhalten wird:
a) Erhitzen eingestellter Milch und/oder Konzentrate aus Magermilch und/oder Konzentrate aus Vollmilch und/oder Konzentrate aus Molke und/oder in Wasser gelöstem Magermilchpulver und/oder in Wasser gelöstem Vollmilchpulver und/oder in Wasser gelösten Molkeneiweißerzeugnissen mit einem Gesamtfettgehalt der Mischung von 3,3 - 12 Gew.-% und einem Gesamteiweißgehalt der Mischung von 3-11 Gew.-*%* zur thermischen Denaturierung der Serumproteine und aus bakteriologischen Gründen,
b) Einrühren von 2-6 Gew.-% Honig und/oder Trockenhonig in die Milch,
c) Einrühren von 10 bis 52 Gew.-*%* Trockenkomponenten, nämlich Zucker und/oder Stärke und/oder Aufschlagmittel und/oder Vanillinzucker sowie von 0 bis 20 Gew.-% geschmacksgebenden Substanzen, nämlich Aromen, Gewürzen, Fruchtkonzentraten, Fruchtzubereitungen und/oder Kakao und/oder Käse oder Käsezubereitungen,
d) Herstellen einer Mischung aus Fett oder aus einer Fettmischung mit Emulgatoren und/oder Stabilisatoren,
e) Vermischen von der nach Schritt d) hergestellten Mischung mit der nach Schritt c) erhaltenen Gesamtmischung und Erhitzen der gesamten Mischung aus bakteriologischen Gründen,
f) Abkühlen der Mischung auf Aufschlagtemperatur,
g) Aufschlagen der Mischung,
h) Abkühlen der aufgeschlagenen Mischung,
i) Kristallisation der Mischung, und
j) Auftragen der fertigen cremeartigen Masse auf einen Teig und/oder ein anderes Lebensmittel.

2. Aufgeschäumte Milchcreme nach Anspruch 1, **dadurch gekennzeichnet**, daß zur Einstellung des Fettgehaltes pflanzliche und/oder tierische Fette wie z.B. Rahm und/oder Butter und/oder Butteröl und/oder Kakaobutter und/oder Margarine und/oder Öle und/oder Halbfetterzeugnisse verwendet werden.

3. Aufgeschäumte Milchcreme nach Anspruch 1, **dadurch gekennzeichnet**, daß zur Einstellung des Eiweißgehaltes eiweißhaltige Erzeugnisse verwendet werden.

4. Aufgeschäumte Milchcreme nach Anspruch 1**, dadurch gekennzeichnet**, daß zur Einstellung des Eiweißgehaltes Milcheiweißpulver verwendet wird.

5. Aufgeschäumte Milchcreme nach Anspruch 1, **dadurch gekennzeichnet**, daß das thermische Denaturieren des Milchproduktes bei 60°C bis 98°C über einen Zeitraum von 45 bis 4 Minuten erfolgt.

6. Aufgeschäumte Milchcreme nach Anspruch 5, **dadurch gekennzeichnet**, daß die Heißhaltezeit 5 bis 10 Minuten beträgt bei einer Temperatur von 95°C bis 90°C.

7. Aufgeschäumte Milchcreme nach Anspruch 1, **dadurch gekennzeichnet**, daß zunächst eine UHT-Erhitzung der Milch, vorzugsweise auf 135°C bis 145°C vorgesehen ist und danach eine Abkühlung auf 95°C bis 90°C.

8. Aufgeschäumte Milchcreme nach Anspruch 1, **dadurch gekennzeichnet**, daß für Schritt d) eine Mischtemperatur von 40°C bis 70°C vorgesehen ist.

9. Aufgeschäumte Milchcreme nach Anspruch 1, **dadurch gekennzeichnet**, daß die nach den Schritten c) und d) hergestellten Mischungen bei einer Temperatur von 40°C bis 80°C miteinander vermischt werden.

10. Aufgeschäumte Milchcreme nach Anspruch 1, **dadurch gekennzeichnet**, daß 20-30 Gew.-% der nach Schritt d) hergestellten Mischung mit 70 bis 80 Gew.-% der nach Schritt c) erhaltenen Mischung vermischt werden.

11. Aufgeschäumte Milchcreme nach Anspruch 1, **dadurch gekennzeichnet**, daß die gesamte nach Schritt e) erhaltene Mischung aus bakteriologischen Gründen auf 70°C bis 145°C erhitzt wird.

12. Aufgeschäumte Milchcreme nach Anspruch 1, **dadurch gekennzeichnet**, daß das Fett bzw. die Fettmischung auf einen Schmelzbereich der Hauptfettfraktionen zwischen 28°C und 45°C eingestellt wird durch Verwendung verschiedener Fette, durch Fraktionierung eines Fettes oder einer Fettmischung und/oder durch Härtung.

13. Aufgeschäumte Milchcreme nach Anspruch 12, **dadurch gekennzeichnet**, daß zur Erzielung einer festeren Konsistenz der Masse Kakaobutter zugegeben wird.

14. Aufgeschäumte Milchcreme nach Anspruch 1, **dadurch gekennzeichnet**, daß die Herstellungsschritte a) bis c) im Umlaufverfahren durchgeführt werden.

15. Aufgeschäumte Milchcreme nach Anspruch 1, **dadurch gekennzeichnet,** daß die Masse vor dem Aufschlag auf 80°C-25°C gekühlt wird.

16. Aufgeschäumte Milchcreme nach Anspruch 1, **dadurch gekennzeichnet**, daß die Masse vor dem Aufschlag auf 12-4°C gekühlt, gelagert, auf 70-98°C erhitzt und wiederum auf 80-25°C gekühlt wird.

17. Aufgeschäumte Milchcreme nach Anspruch 1, **dadurch gekennzeichnet**, daß die Masse je nach gewünschtem Gefüge auf 30-200 Vol.-% aufgeschlagen wird.

18. Aufgeschäumte Milchcreme nach Anspruch 17, **dadurch gekennzeichnet**, daß die Masse mit Luft oder Inertgas aufgeschlagen wird.

19. Aufgeschäumte Milchcreme nach Anspruch 1, **dadurch gekennzeichnet**, daß die aufgeschlagene Mischung auf 35°C bis -10°C gekühlt wird.

20. Aufgeschäumte Milchcreme nach Anspruch 19, **dadurch gekennzeichnet**, daß die aufgeschlagene und gekühlte Mischung in einem Pinmixer behandelt wird.

21. Aufgeschäumte Milchcreme nach Anspruch 1 oder 20, **dadurch gekennzeichnet,** daß vor dem Auftragen der Masse eine Reworkmenge von 0 bis 50 % der Masse entnommen, rückgeschmolzen und auf 35°C bis 70°C erwärmt und danach einer fertigen Vormischung nach Schritten a) bis e) zugemischt wird.

22. Verfahren zur Herstellung einer aufgeschäumten Milchcreme nach den Ansprüchen 1 bis 21, **gekennzeichnet durch** die Folge der Herstellungsschritte gemäß Ansprüchen 1 bis 21.

23. Aufgeschäumte Milchcreme nach einem der Ansprüche 1 bis 21, **gekennzeichnet durch** folgende Rezeptur:
| | |
|---|---|
| Milch, frisch, 3,5 % Fett | 15 - 37 Gew.-% |
| Rahm (20-40 % Fett) | 0 - 5 Gew.-% |
| Fett | 15 - 30 Gew.-% |
| Zucker | 15 - 19 Gew.-% |
| Glucose | 0 - 9 Gew.-% |
| Stabilisator | 0 - 1,2 Gew.-% |
| Lecithin | 0 - 0,6 Gew.-% |
| Aufschlagmittel | 7 - 20 Gew.-% |
| Honig | 2 - 6 Gew.-% |
| Eiweißhaltiges Erzeugnis (30-99 % Trockenmasse) | 0 - 3 Gew.-% |
| Stärke | 0 - 5 Gew.-% |
| Vanillinzucker | 0 - 0,03 Gew.-% |
| Aromastoffe | 0 - 1 Gew.-% |
| Färbende Lebensmittel | 0 - 5 Gew.-% |
| Kakaopulver | 0 - 5 Gew.-% |
| Andere geschmacksgebende Substanzen | 0 - 20 Gew.-% |
